# EUROPÄISCHE PATENTSCHRIFT

(11) **EP 0 427 746 B1**
(45) Veröffentlichungstag und Bekanntmachung des Hinweises auf die Patenterteilung: **28.04.1993**
(21) Anmeldenummer: 89908386.9
(22) Anmeldetag: 25.07.1989
(51) Int. Cl.: B01D 35/18, F02M 31/16, B01D 35/30

(54) **KOMBINIERTES VORWÄRM- UND FILTERGERÄT, INSBESONDERE FÜR EINEN KRAFTFAHRZEUGMOTOR**
COMBINED PRE-HEATING AND FILTERING DEVICE, IN PARTICULAR FOR AUTOMOBILE ENGINES
SYSTEME DE COMBINE DE PRECHAUFFAGE ET DE FILTRE, CONVENANT EN PARTICULIER POUR UN MOTEUR DE VEHICULE AUTOMOBILE

(30) Priorität: 25.07.1988 DE 3825176
(43) Veröffentlichungstag der Anmeldung: 22.05.1991
(73) Patentinhaber: SANDER, Anita, D-75378 Bad Liebenzell (DE)
(72) Erfinder: SANDER, Anita, D-75378 Bad Liebenzell (DE)
(74) Vertreter: Zeitler, Giselher, Dipl.-Ing.
(86) Internationale Anmeldenummer: DE8900487
(87) Internationale Veröffentlichungsnummer: WO9000925

(56) Entgegenhaltungen:
- EP-A- 45 707
- EP-A- 171 922
- DE-A- 2 360 539
- DE-A- 2 845 520
- FR-A- 989 679
- FR-A- 2 177 159
- FR-A- 2 361 139
- FR-A- 2 520 444
- US-A- 1 856 771

## Beschreibung

Die Erfindung betrifft ein kombiniertes Vorwärm- und Filtergerät, insbesondere für einen Kraftfahrzeugmotor, gemäß dem Oberbegriff des Anspruchs 1.

Bei bekannten Geräten dieser Art sind viele Formen der Filterung verschiedener Flüssigkeiten bekannt. So ist in der FR-A-2 177 159 ein Gerät beschrieben, bei dem zwei Kammern vorgesehen sind. Durch die äußere Kammer wird dabei eine Flüssigkeit, z.B. das erwärmte Wasser aus dem Kühlkreislauf, hindurchgeführt. Dieser Umlauf bewirkt die Erwärmung der inneren zweiten Kammer, wodurch der durch diese Kammer hindurchgeführte Treibstoff vorerwärmt und gleichzeitig durch das in dieser Kammer befindliche Filterelement filtriert wird. In gleicher Weise ist das aus der FR-A-2 520 444 bekannte Gerät ausgebildet. In der EP-A-171 922 ist ein Gerät zur Abtrennung von Wasser und anderen Unreinheiten vom Treibstoff beschrieben, bei dem ebenfalls eine Kammer mit einem Filterelement vorhanden ist, durch das der Treibstoff hindurchgeführt wird.

Als nachteilig ist hierbei jedoch anzusehen, daß es bisher noch nicht möglich war, bei konstruktiv vertretbarem, möglichst geringem Aufwand eine Vielzahl von Kombinationsmöglichkeiten zur Verfügung zu haben und gleichzeitig einen guten Wirkungsgrad der Vorwärmfunktion sowie auch der Filterfunktion zu gewährleisten.

Der Erfindung liegt daher die Aufgabe zugrunde, das kombinierte Vorwärm- und Filtergerät der gattungsgemäßen Art zur Beseitigung der geschilderten Nachteile derart auszugestalten, daß es mit möglichst geringem konstruktiven Aufwand eine Vielzahl von Kombinationsmöglichkeiten erlaubt und insbesondere eine ausgezeichnete Vorwärmung bei einem Fluid, wie Motorkraftstoff, insbesondere Dieselkraftstoff, Scheibenwischerwasser, Luft usw., sowie eine gleichzeitige Filterung eines die Vorwärmung bewirkenden anderen Fluids, wie Motoröl, Kühlwasser usw., gewährleistet.

Diese Aufgabe wird durch das kombinierte Vorwärm- und Filtergerät gemäß der Erfindung mit den Merkmalen des Anspruchs 1 gelöst. Vorteilhafte Ausgestaltungen hiervon sind in den weiteren Ansprüchen enthalten.

Das erfindungsgemäß ausgestaltete kombinierte Vorwärm- und Filtergerät vereint in vorteilhafter Weise mehrere Möglichkeiten in sich. Von besonderer Bedeutung ist hierbei, daß das erfindungsgemäße Gerät die ihm durch ein zu filterndes Fluid zugeleitete Wärme nutzt, um ein anderes Fluid vorzuwärmen bzw. zu erwärmen, beispielsweise Dieselkraftstoff, Scheibenwischerwasser oder Verbrennungsluft, die dann in Form einer pulsierenden Luftströmung erwärmt zum Vergaser eines Motors geführt wird. Gleichzeitig wird das erfindungsgemäße Gerät dazu verwendet, dasjenige Fluid, das seinen Wärmeinhalt abgibt, sowohl grob als auch fein zu filtern. Das erfindungsgemäße Gerät speichert somit die ihm beispielsweise durch Motorenöl zugeführte Wärme in einer Filterkammer und überträgt diese auf eine nahebei angeordnete Vorwärmkammer, in der ein entsprechend gewünschtes Medium, insbesondere Kraftstoff, Scheibenwischerwasser sowie andere Flüssigkeiten und auch Luft, vorgewärmt wird. Die hierdurch veränderten Temperaturverhältnisse bei den jeweiligen Fluiden erzeugen positive Wirkungen und verändern physikalische Eigenschaften. Bei Wunsch kann das erfindungsgemäße Vorwärm- und Filtergerät mit entsprechenden Zusatzeinrichtungen ausgerüstet sein, wie beispielsweise elektrischen Heizstäben, Meßeinrichtungen, elektronischen Steuerungen, Computersteuerungen für die Laufgeschwindigkeit der pulsierenden, zum Motorvergaser strömenden Luft usw.

Bei dem erfindungsgemäßen Vorwärm- und Filtergerät wird demgemäß in vorteilhafter Weise der in einem Fluid enthaltene Wärmeinhalt zur Erwärmung eines anderen Fluids genutzt, indem beispielsweise die zugeführte Wärme von Motorenöl eines Verbrennungsmotors verwendet wird, wobei gleichzeitig das Motorenöl gefiltert wird. Das Motorenöl erfährt dabei durch die Abgabe seines Wärmeinhaltes eine Kühlung. Dies erfolgt durch gleichzeitiges kombiniertes Anordnen von zwei oder mehreren Kammern im Vorwärm- und Filtergerät.

Bei einer Ausführungsform des erfindungsgemäßen Gerätes ist eine Außenkammer vorgesehen, die konzentrisch eine Innenkammer umgibt. Hierbei wird die Außenkammer von warmem Motorenöl durchströmt, das in dieser Kammer gefiltert wird. Als Filterelement ist zu diesem Zweck ein spezielles Isoliermaterial vorgesehen, das als Feinstfilterelement für das Motorenöl dient und gleichzeitig dessen Wärme bindet. Die von der Außenkammer umschlossene Innenkammer des Gerätes wird von einem anderen Fluid, beispielsweise Kraftstoff, insbesondere Dieselkraftstoff, durchströmt, der an den Seitenwänden der Innenkammer erwärmt und insgesamt gleichzeitig in der Innenkammer gefiltert wird. Dadurch wird z.B. bei niedrigen Betriebstemperaturen ein günstigeres Zünd- und Laufverhalten des Motors erzeugt. Ferner ergeben sich auch mindernde Wirkungen auf den Kraftstoffverbrauch sowie den Dieselrußausstoß bei Dieselfahrzeugen. Andere vorteilhafte Wirkungen werden dann erzielt, wenn andere Fluide, insbesondere Flüssigkeiten, in der Innenkammer vorgewärmt werden, beispielsweise dann, wenn Scheibenwischerwasser für die Betreibung einer Scheibenwischeranlage an einem Kraftfahrzeug vorgewärmt wird. Weiterhin weist das erfindungsgemäße Gerät den entscheidenden Vorteil auf, daß an einem einzigen Block mehrere Flüssigkeiten gefiltert werden können, z.B. Motorenöl (Grobfilterung und/oder Feinfilterung), Wasser, Kühlmittel, Getriebbeöl usw.. Zu diesem Zweck weist das Vorwärm- und Filtergerät gemäß der Erfindung mehrere Filterkammern bzw. Filterelemente auf, die wahlweise bausteinförmig aneinandergefügt bzw. miteinander verbunden sind und entsprechende Anschlüsse aufweisen, um die Zufuhr sowie Abfuhr der zu filternden Flüssigkeiten zu ermöglichen.

Damit ermöglicht das Vorwärm- und Filtergerät gemäß der Erfindung eine Vielzahl von Kombinationen, von denen im folgenden lediglich des Beispiels halber einige kurz erläutert seien:

Wie schon dargelegt, kann das Gerät aus einer Innenkammer und einer konzentrisch hierzu angeordneten Außenkammer bestehen, wobei in letztere ein einen Wärmeinhalt aufweisendes Fluid, insbesondere Motorenöl, Kühlwasser oder eine andere Flüssigkeit, zugeführt und dort gefiltert wird. Der vorgesehene Rücklauf dieses gefilterten Fluids ermöglicht einen ständigen Kreislauf. Gleichzeitig gibt die Außenkammer ihre Wärme an die Innenkammer ab, in der ein anderes Fluid, insbesondere Dieselkraftstoff, vorgewärmt wird, wobei gleichzeitig auch eine Filterung des betreffenden Fluids vorgesehen sein kann. Eine schnelle Zusatzerwärmung kann durch einen zusätzlichen elektrischen Heizstab oder dgl. erzielt werden, der in der Anfangsbetriebsphase die Vorheizung übernimmt und durch selbstregulierende PTC-Heizelemente oder durch thermostatgesteuerte Heizelemente gesteuert sein kann. Aufgrund dieser Anordnung wird gewährleistet, daß - bei der Zufuhr von Dieselkraftstoff in die Innenkammer - vorerwärmter Dieselkraftstoff zum fahrzeugeigenen Dieselkraftstoffilter oder direkt in die Dieseleinspritzpumpe strömt.

Bei einem anderen Ausführungsbeispiel kann auch vorgesehen sein, als vorzuwärmendes Fluid Scheibenwischerwasser zu verwenden, um warmes Wasser an die gewünschte Stelle zu fördern. Selbstverständlich ist es auch möglich, weitere Flüssigkeiten durch das erfindungsgemäße Gerät vorzuwärmen.

Gemäß einer weiteren Ausführungsform kann in der Vorwärmkammer auch Luft vorgewärmt werden, die dann in Form einer pulsierenden Luftströmung dem Vergaser eines Kraftfahrzeugmotors zugeführt wird, nachdem sie einen Staubfeinstfilter durchströmt hat. In diesem Fall werden in noch zu beschreibender Weise in der Vorwärmkammer Wirbelströme erzeugt, welche die Zerstäubung des Benzin-Luftgemisches verbessern. Dies hat zur Folge, daß dem Verbrennungsvorgang ein annähernd ideales Gemisch zugeführt wird. Der pulsierende vorgewärmte Luftstrom versorgt die Motorzylinder, insbesondere in deren Randbereich, mit mehr Sauerstoff. Hierdurch werden die CO-Werte, HC-Werte, NOₓ-Werte sowie weitere Schadstoffanteile der Motorabgase drastisch reduziert. Dieser lufttechnische Steuerungsvorgang wird durch eine entsprechend ausgestaltete Vorwärmkamme, d.h. durch eine Stellschraube, durch pulsierende Kugeln, durch in der Vorwärmkammer aufgenommene Wärme sowie durch ein Staubfeinstfilter, erreicht. Eine derartige Einrichtung kann auch außerhalb des kombinierten Vorwärm- und Filtergerätes zur Anwendung gelangen. In jedem Fall führt die Kombination der Ölfeinstfilterung eines Verbrennungsmotors mit der vorerwähnten lufttechnischen Einrichtung zu einem nahezu schadstoffarmen Abgasverhalten.

Bei einer anderen abgewandelten Ausführungsform der Erfindung ist es möglich, eine Grobfilterung sowie Feinstfilterung eines Fluids in Kombination mit weiteren Funktionen, die auf andere Fluide ausgeübt werden, zu erreichen. So wird z.B. in einem Kraftfahrzeug die Ölumlaufschmierung in eine Grobfilterkammer geführt, wobei dann eine Teilmenge hiervon zu einer Feinstfilterkammer geleitet wird. Durch diese kombinierte Filterung können Ölwechselintervalle entscheidend erhöht werden. In weiteren Kammern des Gerätes werden dann andere Flüssigkeiten durch Wärme oder Kälte beeinflußt, so daß hierdurch vorteilhafte technische Effekte oder veränderte chemische Reaktionen erzielt werden.

Erfindungsgemäß kann somit das kombinierte Vorwärm- und Filtergerät in vorteilhafter Weise je nach bedarf und Wunsch kombiniert werden. So kann das Gerät ein Kombinationssystem bilden, bestehend aus beispielsweise einer Dieselkraftstoff-Vorwärmkammer und/oder einer Scheibenwischerwasser-Vorwärmkammer und/oder einer Luft-Vorwärmkammer, und zwar in Verbindung mit einer Grobfilterkammer, die mit einer Feinstfilterkammer kombiniert ist. All diese Kammern können wahlweise miteinander kombiniert werden, so daß sie dann ein kombiniertes Gehäuse oder Gerät zur Filterung verschiedener Flüssigkeiten, zur Temperaturbeeinflussung verschiedener Flüssigkeiten, z.B. Motorenöl, Dieselkraftstoff, Wasser, Kühlflüssigkeiten sowie weiteren Flüssigkeiten und auch Luft, bilden. Bei Bedarf sind die Filterkammern untereinander durch Kanäle verbunden. An den einzelnen Kammern befinden sich Anschlüsse zur Zuleitung und Rückleitung der Flüssigkeiten. Das gesamte Kombinationsgerät kann in Rohrform oder Blockform hergestellt sein.

Wenn das erfindungsgemäße Gerät zur Vorwärmung von Dieselkraftstoff zur Anwendung gelangt, kann diese Vorwärmung durch erwärmtes Motorenöl, das der Ölumlaufschmierung eines Motors entnommen wird, durch erwärmtes Kühlwaser, das dem Kühlwasserkreislauf eines Motors entnommen wird, oder durch andere Flüssigkeiten erwirkt werden, welche die Vorwärmkammer umströmen. In diesem Fall kann die Dieselvorwärmkammer auch mit einer elektrischen Heizpatrone ausgestattet sein, die für eine vorübergehende Soforterwärmung sorgt, bis in der Außenkammer die entsprechende Temperatur erreicht ist. Die dem Motoröl innewohnende Wärme wird durch ein Isolierelement erhalten, das gleichzeitig als Ölfeinstfilterelement verwendet wird. Durch eine derartige Dieselkraftstoffvorwärmung werden Dieselwinterprobleme unterbunden. Gleichzeitig werden günstigere Auswirkungen auf den Kraftstoffverbrauch sowie auf den Dieselrußausstoß erzielt.

Mit dem erfindungsgemäßen Gerät ist es auch möglich, in der inneren Vorwärmkammer einen pulsierenden Luftstrom zu erzeugen, der dann in vorerwärmter Form zum Vergaser eines Motors geführt wird, und zwar speziell in die Einlaßsammelleitung. Hierdurch werden vorteilhafte physikalische Effekte erzielt, wie z.B. eine außerordentlich gute Zerstäubung des Benzin-Luftgemischs durch Wirbelströme sowie eine gute Gemischaufbereitung auf der Basis des Schicht-Ladeprinzips. Die verbesserte Zerstäubung des Benzin-Luftgemischs hat zur Folge, daß dem Verbrennungsvorgang ein völlig homogenes Gemisch zugeführt wird, wobei der unterdruckabhängige pulsierende Luftstrom die Motorzylinder, insbesondere in deren Wandrandbereich, mit mehr Sauerstoff versorgt. Hierbei wird die Vorwärmung de Luft ebenfalls durch den Wärmeinhalt des durch die Außenkammer hindurchgeleiteten Fluids, z.B. durch das in dieser Außenkammer gefilterte Motorenöl oder durch andere Flüssigkeiten, bewirkt. Insgesamt wird dadurch der Schadstoffanteil der Motorabgase erheblich gemindert, und es wird der Kraftstoffverbrauch beträchtlich reduziert.

Bei dem erfindungsgemäßen Gerät gelangen die Filterkammern als Wärmespeicherkammer zur Anwendung, die ihre Wärme an die Vorwärmkammer abgeben. Zu diesem Zweck sind die Filterkammern mit solchen Filterelementen ausgerüstet, die gleichzeitig ein Wärmeisolationselement bilden, um ein vorschnelles Entweichen derjenigen Wärme, die dem zu filternden Fluid innewohnt, zu verhindern. Diese Wärmeisolationselemente können gleichzeitig als Feinstfilterelemente verwendet werden, die koaxial bzw. vertikal durchströmt werden und kombiniert angeordnet sind. Selbstverständlich können auch kombinierte Filterungen erfolgen, z.B. in der Innenkammer eine Grobfilterung und in der Außenkammer eine Feinstfilterung, wobei dann die jeweiligen Kammern durch Kanäle verbunden sind. Die kombinierte Verwendung eines Elementes als Wärmeisoliermaterial und gleichzeitig als Filtermaterial bewirkt bei Fahrzeugmotoren, daß die Ölwechselintervalle wesentlich erhöht werden und gleichzeitig die Altölmenge reduziert wird. Demgemäß liegt dem vorstehend geschilderten Vorwärm- und Filtergerät gemäß der Erfindung der grundlegende Gedanke zugrunde, den Wärmeinhalt eines in einer Filterkammer, beispielsweise in einer Außenfilterkammer gefilterten Fluids, beispielsweise Motorenöl, zu nutzen, um eine physikalische Wirkung auf ein anderes Fluid, d.h. Flüssigkeit oder Luft, auszuüben, das eine andere Kammer durchströmt, insbesondere eine innere oder eine anliegende Vorwärmkammer. Gleichzeitig kann in dieser Vorwärmkammer auch eine Filterung des betreffenden Fluids bewirkt werden.

Die Erfindung zeichnet sich außerdem durch die kombinierte Anwendung eines Wärmeisoliermaterials aus, das gleichzeitig als Feinstfiltermaterial dient. Zu diesem Zweck wird als Feinstfiltermaterial ein Wärmeisoliermaterial verwendet, das ein vorschnelles Entweichen der dem zu filternden Fluid innewohnenden Wärme verhindert und somit gewährleistet, daß die beispielsweise vom Motorenöl aufgefangene Wärme länger erhalten bleibt. Als Wärmeisoliermaterial gelangt vorzugsweise ein Papiermaterial zur Anwendung, das ein Oberflächengewicht von 68 - 95 g/m² aufweist, flusenfest sowie reißfest ist und aus zwei kreuzweise zusammengearbeiteten Lagen besteht, die eine wabenähnliche Struktur mit einer gewissermaßen wattierten Zwischenlage aufweisen, so daß eine hohe Isolierfähigkeit gegeben ist. Geringe Kunstharzmengen halten die wabenähnliche Struktur zusammen. Insgesamt ist eine hohe Isolierfähigkeit des Materials gegeben, die ein zu schnelles Entweichen der aufgefangenen Wärme verhindert.

Die Erfindung wird im folgenden in Form mehrerer Ausführungsbeispiele anhand der Zeichnung näher erläutert. Diese zeigt in:
- Fig. 1: schematisch im Schnitt eine Ausführungsform des Vorwärm- und Filtergerätes gemäß der Erfindung mit konzentrischer Anordnung der einzelnen Kammern;
- Fig. 2: eine abgewandelte Ausführungsform mit zwei Filterkammern zur Erhöhung der Wärmekammerkapazität;
- Fig. 3: eine weitere abgewandelte Ausführungsform mit vier Filterkammern;
- Fig. 4: eine weitere abgewandelte Ausführungsform mit einer radial durchströmten Filterkammer;
- Fig. 5: eine weitere abgewandelte Ausführunsform eines bausteinförmig in Blockform vorgesehenen Vorwärm- und Filtergerätes schematisch in Draufsicht,
- Fig. 6: im Längsschnitt gemäß Linie A-A' nach Fig. 5 und
- Fig. 7: im Längsschnitt gemäß Linie B-B' nach Fig. 5;
- Fig. 8, 9 u.10: jeweils schematisch in Draufsicht abgewandelte Ausführungsformen des Vorwärm- und Filtergerätes gemäß Fig. 5 mit unterschiedlicher Anordnung der Gerätekammern;
- Fig. 11: das Vorwärm- und Filtergerät in der Anwendung bei einem Dieselmotor zur Dieselkraftstoff-Vorwärmung sowie zur Feinstfilterung des Motorenöls;
- Fig. 12: das Vorwärm- und Filtergerät in der Anwendung bei einem Benzinmotor zur Vorwärmung des Scheibenwischerwassers sowie zur Feinstfilterung des Motorenöls;
- Fig. 13: schematisch perspektivisch das direkt am Motorblock eines Dieselmotors montierte Vorwärm- und Filtergerät;
- Fig. 14: vergrößert im Detail die Vorwärmkammer für Kraftstoff oder Scheibenwischerwasser und
- Fig. 15: im Schnitt eine abgewandelte Ausführungsform der Vorwärmkammer zur Erwärmung von Luft.

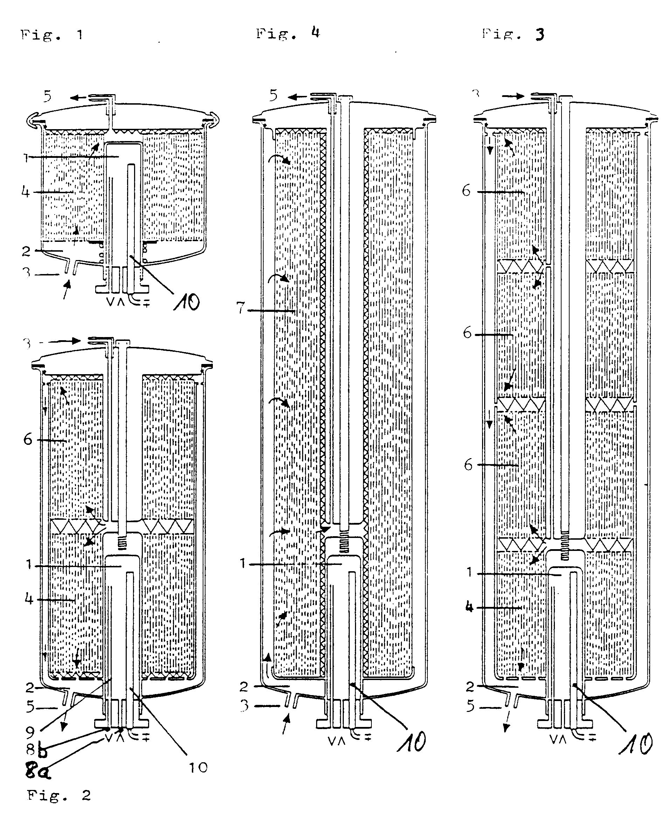

Das in Fig. 1 der Zeichnung dargestellte kombinierte Vorwärm- und Filtergerät ist als Dieselkraftstoff-Vorwärmgerät vorgesehen bzw. ausgebildet. Zu diesem Zweck ist eine innere Dieselvorwärmkammer 1 vorgesehen, die konzentrisch von einer als Filterkammer dienenden Außenkammer 2 umgeben ist. Die Vorwärmkammer 1 wird durch die Außenkammer 2 erwärmt, und zwar z.B. durch warmes Motorenöl, das über einen unteren Zulaufanschluß 3 in die Außenkammer 2 eingeleitet wird, vertikal von unten nach oben durch die Außenkammer 2 strömt und dann über einen Rücklaufanschluß 5 wieder aus der Außenkammer 2 austritt sowie zum Kraftfahrzeugmotor zurückströmt. Hierbei ist die Strömungsrichtung des warmem Motoröls durch die in Fig. 1 eingezeichneten Pfeile angedeutet. Das Motorenöl wird in der Außenkammer 2 durch ein hierin eingesetztes kombiniertes Isolier- und Feinstfilterelement 4 gefiltert, wobei letzteres, wie eingangs schon dargelegt, aus einem Wärmeisoliermaterial, vorzugsweise aus einem speziellen Papiermaterial, besteht, das ein vorschnelles Entweichen der vom Motorenöl aufgefangenen Wärme verhindert, so daß diese Wärme an die Vorwärmkammer 1 abgegeben werden kann.

Wie aus den abgewandelten Ausführungsformen gemäß Fig. 2, 3 und 4 ersichtlich, kann bei Wunsch die Vorwärmkapazität der Außenkammer 2 erhöht werden. Dies wird dadurch erreicht, daß beliebig viele Isolier- und Filterelemente vorgesehen werden. So ist bei der Ausführungsform gemäß Fig. 2 zusätzlich zu dem Isolier- und Filterelement 4 ein weiteres, koaxial hierzu vorgesehenes Isolier- und Filterelement 6 angeordnet, während bei der Ausführungsform gemäß Fig. 3 drei weitere Isolier- und Filterlemente 6 in der dargestellten Weise vorgesehen sind. Hierbei wird das Motorenöl, um eine wirksamere Filterung zu erzielen, mehrschichtig durch die Isolier- und Filterelemente 4, 6 geführt, und zwar in vertikaler Richtung. Wie ersichtlich, strömt hierbei sowohl bei der Ausführungsform gemäß Fig. 2 als auch bei derjenigen gemäß Fig. 3 das Motorenöl von oben durch den Zulaufanschluß 3 in die Außenkammer 2 ein, verteilt sich jeweils in Richtung der gezeigten Pfeile auf die einzelnen Filterelememte 6, 4 und fließt dann unten durch den Rücklaufanschluß 5 in gefiltertem Zustand aus der Außenkammer 2 heraus.

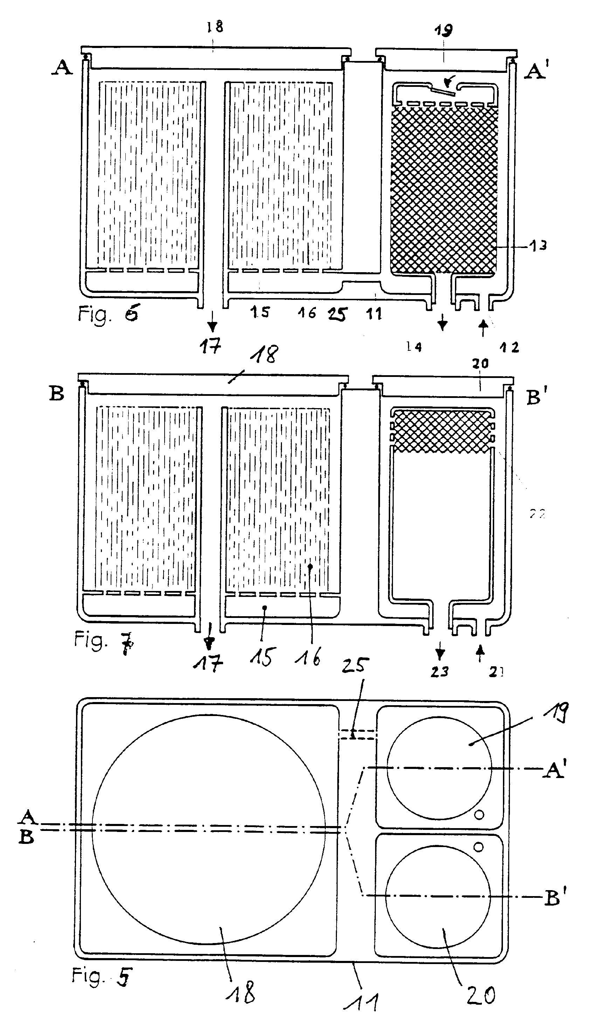

Bei der weiterhin abgewandelten Ausführungsform gemäß Fig. 4 gelangt in der Außenkammer 2 ein solches Isolier- und Filterelement 7 zur Anwendung, bei dem das Motorenöl, das unten in den Zulaufanschluß 3 eintritt und oben aus dem Rücklaufanschluß 5 aus der Außenkammer 2 ausströmt, das Isolier- und Filterelement 7 radial, d.h. horizontal von außen nach innen, zum Zweck der Filterung durchdringt.

Bei sämtlichen der beschriebenen Ausführungsformen ist die innere Vorwärmkammer 1, die zur Vorwärmung des Dieselkraftstoffs dient, derart ausgestaltet, daß sie einen Zulauf 8a für den Dieselkraftstoff, einen Rücklauf 8b sowie ein Niveaurohr 9 aufweist. Letzteres sorgt dafür, daß der Dieselkraftstoff erst dann durch den Rücklauf 8b aus der Vorwärmkammer 1 ausströmen kann, nachdem er im Innern der Vorwärmkammer 1 bis zum entsprechenden Eintrittsende des Niveaurohrs 9 hochgestiegen ist und sich somit an den Wänden der Vorwärmkammer 1 erwärmt hat.

Weiterhin ist in die Vorwärmkammer 1 in der dargestellten Weise ein elektrischer Heizstab 10 eingesetzt, der bei Bedarf für eine sofortige Schnellerwärmung des Dieselkraftstoffs vor und nach dem Start des Motors sorgt.

Bei der weiterhin abgewandelten Ausführungsform gemäß Fig. 5, 6 und 7 ist das kombinierte Vorwärm- und Filtergerät nicht rohrförmig wie bei den zuvor erläuterten Ausführungsformen, sondern blockähnlich in Baukastenform ausgestaltet. Zu diesem Zweck ist ein entsprechend ausgebildetes Gehäuse 11 für das kombinierte Vorwärm- und Filtergerät vorgesehen, das bei dem beschriebenen Ausführungsbeispiel zur Grobfilterung sowie Feinstfilterung von Motorenöl sowie zur Vorwärmung von Kraftstoff, insbesondere Dieselkraftstoff, dient, aber auch zur Erwärmung oder Kühlung anderer Flüssigkeiten vorgesehen sein kann. Wie dargestellt, erfolgt die Zufuhr des Motorenöls von beispielsweise der Öldruckumlaufschmierung eines Kraftfahrzeugmotors zum Gehäuse 11, und zwar über einen Zulaufanschluß 12, durch den das Motorenöl in eine Grobfilterkammer 13 von oben her eintritt. Nach dem Durchlauf durch diese Grobfilterkammer 13 tritt das Motorenöl über einen Rücklauf 14 aus dem Gehäuse 11 aus. Gleichzeitig wird jedoch eine Teilmenge des Motorenöls über einen Abzweigkanal 25 in eine Feinstfilterkammer 15 geführt, in der es ein Feinstfilterelement 16 durchströmt und sodann über einen Rücklaufanschluß 17 aus dem Gehäuse 11 austritt.

Wie dargestellt, weist das Gehäuse 11 entsprechende Öffnungen bzw. Deckel 18, 19, 20 auf, die ein leichtes Wechseln der in den jeweiligen Kammern 13, 15 befindlichen Filterelemente sowie auch eines weiteren Filterelementes 22 ermöglichen. Dieses letztgenannte Filterelement 22 ist in einer eigenen Kammer vorgesehen, die als Vorwärmkammer dient, da sie die Wärme des Motorenöls übernimmt und somit den durch sie hindurchströmenden Kraftstoff erwärmt bzw. vorwärmt. Zu diesem Zweck fließt der Kraftstoff durch einen Zulauf 21 in die Vorwärmkammer ein, wird durch einen entsprechenden Kanal (siehe Fig. 7), der als Niveaurohr dient, bis nach oben geführt und fließt dann über den Filter 22 gefiltert aus einem Rücklauf 23 zurück.

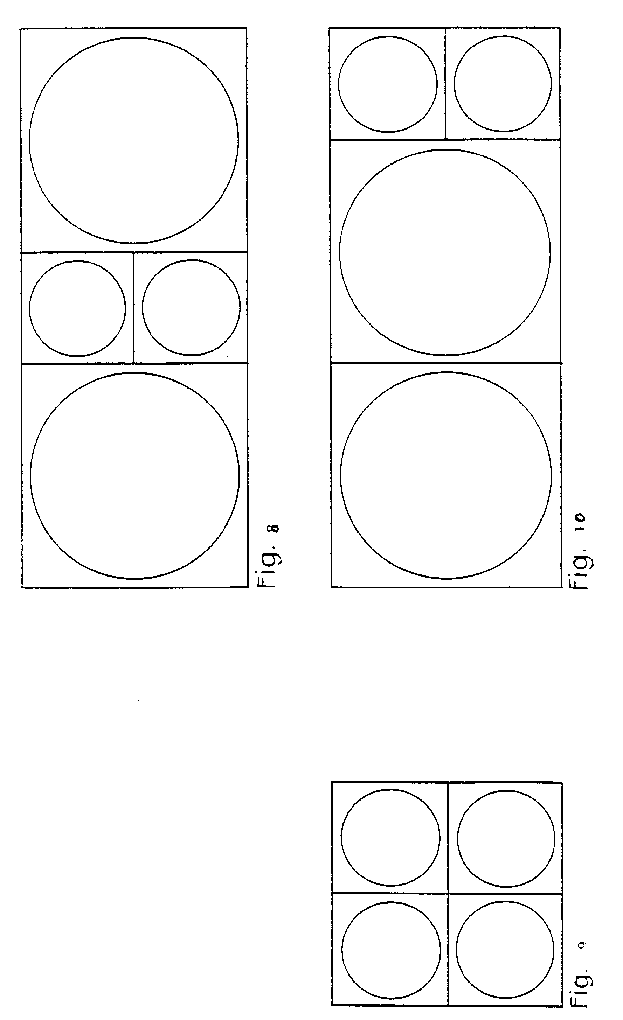

Bei den abgewandelten Ausführungsformen gemäß Fig. 8, 9 und 10 sind jeweils verschiedene Kombinationsmöglichkeiten für die einzelnen Kammern des Gehäuses des Vorwärm- und Filtergerätes ersichtlich. Hierbei ist bei der Ausführungsform gemäß Fig. 8 sowohl links als auch rechts eine Ölfeinstfilterung vorgesehen, während mittig oben beispielsweise eine Ölgrobfilterung sowie mittig unten eine Kraftstoffvorwärmung vorgesehen ist. Demgegenüber zeigt Fig. 9 links oben eine Ölfilterung, links unten eine Getriebeölfilterung, rechts oben eine Kraftstoffvorwärmung sowie rechts unten eine Scheibenwischerwasser-Vorwärmung. Schließlich ist aus Fig. 10 eine Ausführungsform ersichtlich, bei der rechts oben eine Ölgrobfilterung sowie rechts unten eine Kraftstoffvorwärmung erfolgt, während die verbleibenden Gehäusekammern eine Ölfeinstfilterung bewirken. Selbstverständlich sind bei Wunsch und Bedarf beliebig andere Kombinationen der verschiedenen Vorwärm- und Filterkammern möglich, da die jeweiligen Kammern in einfacher Weise bausteinförmig aneinandergefügt werden können.

Aus der weiterhin abgewandelten Ausführungsform gemäß Fig. 11 ist die Anwendungs- sowie Anschlußmöglichkeit des beschriebenen Vorwärm- und Filtergerätes gemäß Fig. 1 ersichtlich, und zwar in Verbindung mit einem Dieselmotor 39. Hierbei wird an einem Öldruckpunkt der Ölumlaufschmierung, z.B. dem Ölwarndruckschalter 30 oder dgl., eine Teilmenge Motorenöl entnommen, die zum Zulaufanschluß 31 des Vorwärm- und Filtergerätes geführt wird. Nach erfolgter Filterung in der Außenkammer 2 tritt das Motorenöl über einen Rücklaufanschluß 32 aus und wird in gereinigter Form zu einem Anschlußpunkt 33, beispielsweise zur Ölwanne des Dieselmotors 39, zurückgeführt. Demgegenüber wird der Dieselkraftstoff von einem Kraftstofftank 29 über einen fahrzeugeigenen Dieselfilter 34 zum Dieselzulauf 35 der inneren Dieselvorwärmkammer 1 geführt. Der in dieser Vorwärmkammer 1 vorgewärmte Dieselkraftstoff tritt dann über einen Dieselrücklauf 36 aus der Vorwärmkammer 1 aus und wird direkt in eine Einspritzpumpe 37 geleitet. Der vorgewärmte Dieselkraftstoff kann aber auch zuerst über den fahrzeugeigenen Dieselfilter 34 geleitet werden.

Wie weiterhin aus Fig. 11 ersichtlich, ist in der Vorwärmkammer 1 ein Heizstab 38 vorgesehen, dessen elektrische Anschlüsse mit der elektrischen Steuerung des Dieselmotors 39 bzw. des betreffenden Kraftfahrzeuges verbunden sind.

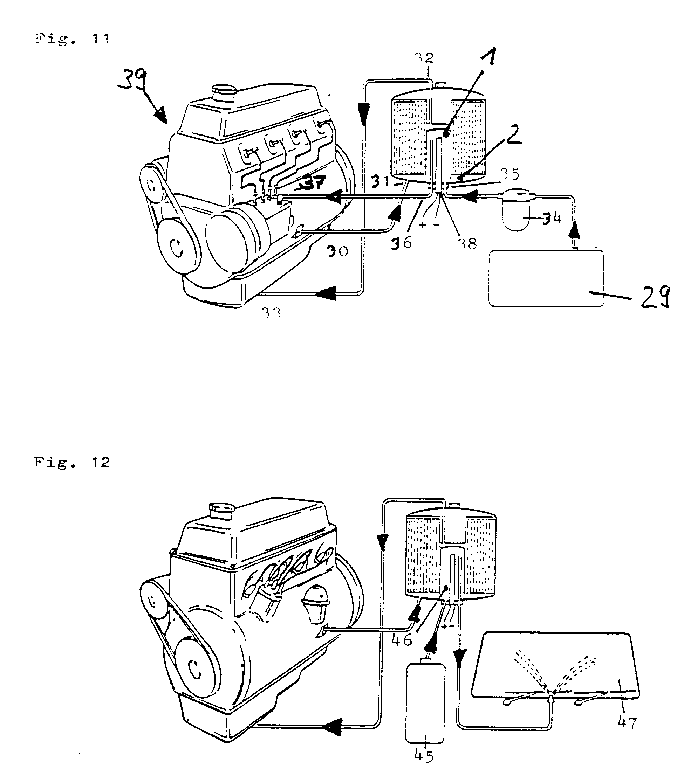

Bei der Ausführungsform gemäß Fig. 12 gelangt das beschriebene Vorwärm- und Filtergerät gemäß Fig. 1 zur Anwendung, um mittels des Motorenöles, das in der gleichen Weise wie bei der Ausführungsform gemäß Fig. 11 im Vorwärm- und Filtergerät eine Feinstfilterung erfährt, Scheibenwischerwasser vorzuwärmen. Zu diesem Zweck wird das Scheibenwischerwasser aus einem Wassertank 45 in die Vorwärmkammer 46 geleitet und von dort nach erfolgter Vorwärmung zur Scheibenwischeranlage 47 geführt.

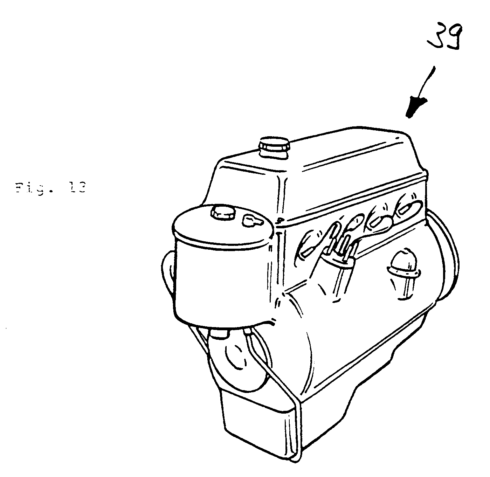

Aus Fig. 13 ist ersichtlich, daß das Vorwärm- und Filtergerät nicht nur an einer beliebigen Stelle im Fahrzeug, insbesondere im Motorraum, angeordnet, sondern auch direkt am Block des Motors 39 befestigt bzw. mit diesem integriert sein kann.

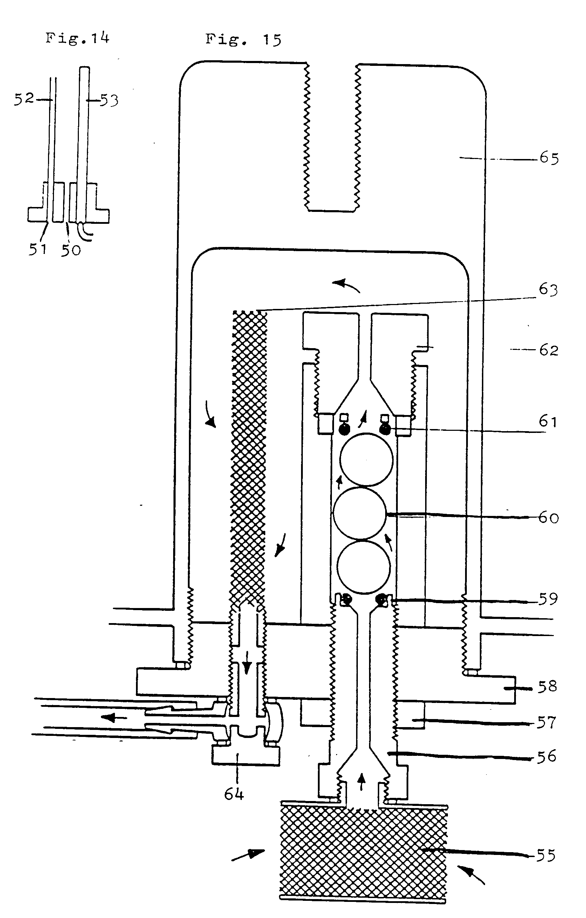

Fig. 14 zeigt in vergrößertem Maßstab die Innenausbildung einer zur Vorwärmung von Dieselkraftstoff oder Scheibenwischerwasser dienenden Vorwärmkammer 1 bzw. 46. Wie ersichtlich, tritt das vorzuwärmende Fluid über einen Zulaufanschluß 50 in die Vorwärmkammer ein und tritt über einen Rücklaufanschluß 51 aus der Vorwärmkammer aus, jedoch erst, nachdem es in dieser Vorwärmkammer eine entsprechende Höhe erreicht hat und somit in ein Niveaurohr 52 eintreten konnte. Die Vorwärmkammer kann mit oder ohne Filterung des vorzuwärmenden Fluids ausgestaltet sein. Wie dargestellt, ist außerdem ein Heizstab 53 vorgesehen.

Die weiterhin abgewandelte Ausführungsform gemäß Fig. 15 zeigt die Innenausbildung einer Vorwärmkammer zur Vorwärmung von Luft. Hierbei wird ein unterdruckabhängiger pulsierender Luftstrom erzeugt, der zum Vergaser bzw. zu den Zylindern des Motors geführt wird, um den Randbereich der Zylinder mit mehr Sauerstoff zu versorgen. Wie dargestellt, ist hierbei die Ausgestaltung derart getroffen, daß im einzelnen vorgesehen sind ein Luftfilter 55, eine Stellhohlschraube 56, eine Kontermutter 57, eine Gerätebefestigungsmutter 58 mit Abdichtung, ein O-Ring 59, drei Kugeln 60, eine Einlagscheibe mit O-Ring 61, eine Düse 62, eine Staubfilterkerze 63, ein Luftzufuhranschluß 64, der zum Vergaser führt, und ein Gehäuse 65, das im Vorwärm- und Filtergerät als innere Vorwärmkammer integriert ist, aber auch getrennt hierzu vorgesehen sein kann. Durch diese Anordnung wird, wie leicht verständlich, ein unterdruckabhängiger pulsierender vorgewärmter Luftstrom erzeugt, der zum Vergaser des Motors bzw. zu den Motorzylindern geführt wird und die bereits eingangs beschriebenen Wirkungen hervorruft. Da die beschriebenen Einzelteile in sich selbst sowie in ihrem gegenseitigen Zusammenwirken ohne weiteres aus der Zeichnung verständlich sein dürften, erscheint eine weitere Erläuterung entbehrlich.

Soweit vorstehend nicht beschrieben, versteht es sich von selbst, daß sämtliche Einzelelemente der erläuterten Ausführungsformen beliebig untereinander kombinierbar sind.

Hinsichtlich im einzelnen nicht erläuterter Merkmale der Erfindung wird im übrigen ausdrücklich auf die Zeichnung verwiesen.

## Patentansprüche

1. Kombiniertes Vorwärm- und Filtergerät, insbesondere für einen Kfz-Motor,
**dadurch gekennzeichnet**,
daß es aus mehreren, jeweils mit Zulaufanschlüssen (3, 12, 21, 31, 35) sowie Auslaufanschlüssen (5, 14, 17, 23, 32, 36) versehenen, bausteinförmig aneinanderfügbaren, in Strömungsverbindung bringbaren Kammern (1, 2, 13, 15) besteht, die eine Wärmeübertragung ermöglichen, wobei wenigstens eine Kammer (2) als Wärmeauffangkammer mit einem Wärmeisolierelement (4, 6, 7, 13) als Filterelement zum Durchlaß eines einen Wärmeinhalt aufweisenden Fluids, wie Motoröl, Kühlwasser, ausgebildet ist, während eine andere Kammer (1) als den Wärmeinhalt der Wärmeauffangkammer (2) wenigstens teilweise aufnehmende Vorwärmkammer für ein anderes Fluid, wie Motorkraftstoff, insbesondere Dieselkraftstoff, Scheibenwischerwasser, Luft, ausgestaltet ist.

2. Gerät nach Anspruch 1, dadurch gekennzeichnet, daß die Vorwärmkammer (1) gleichzeitig als Filterkammer ausgebildet ist.

3. Gerät nach Anspruch 1 oder 2, dadurch gekennzeichnet, daß die Vorwärmkammer (1) mit einem elektrischen Heizstab (10) zur vörubergehenden Soforterwärmung des durchströmenden Fluids, insbesondere Dieselkraftstoffs, versehen ist.

4. Gerät nach einem der Ansprüche 1 bis 3, dadurch gekennzeichnet, daß seine Kammern (1, 2) in konzentrischer bzw. koaxialer Anordnung zueinander mit Innenkammer (1) und Außenkammer (2) vorgesehen sind, wobei die Vorwärmkammer (1) die Innenkammer bildet, während die Außenkammer die Wärmeauffangkammer (2) bildet.

5. Gerät nach Anspruch 4, dadurch gekennzeichnet, daß die Wärmeauffangkammer (2) zur Erhöhung der Vorwärmkapazität und auch der Filterleistung aus mehreren, wenigstens teilweise miteinander verbundenen Filterelementen (4, 6, 7) besteht, die koaxial übereinander angeordnet sind.

6. Gerät nach einem der Ansprüche 1 bis 5, dadurch gekennzeichnet, daß die Wärmeauffangkammer (2) zur vertikalen Durchströmung des zu filternden Fluids ausgebildet ist (Fig. 1 - 3).

7. Gerät nach einem der Ansprüche 1 bis 5, dadurch gekennzeichnet, daß die Wärmeauffangkammer (2) zur radialen Durchströmung des zu filternden Fluids ausgebildet ist (Fig. 4).

8. Gerät nach einem der Ansprüche 1 bis 7, dadurch gekennzeichnet, daß es rohrförmig ausgestaltet ist (Fig. 1 - 4).

9. Gerät nach einem der Ansprüche 1 bis 3, dadurch gekennzeichnet, daß es blockförmig mit bausteinförmig aneinanderfügbaren Kammern (15, 13, 20) ausgebildet ist (Fig. 5 - 10).

10. Gerät nach Anspruch 9,
**dadurch gekennzeichnet**,
daß die Wärmeauffangkammer als Grobfilterkammer (13) ausgestaltet ist und ihr in Fließrichtung des einen Wärmeeinhalt aufweisenden Fluids über einen Kanal (25) eine Feinstfilterkammer (15) nachgeschaltet ist.

11. Gerät nach einem der Ansprüche 1 bis 10, dadurch gekennzeichnet, daß das Wärmeisolierelement (4, 6, 7, 13) in der Filterkammer (2), welches das vorschnelle Entweichen der im zu filternden Fluid enthaltenen Wärme verhindert und als Filtermaterial dient, aus einem flusen- und reißfesten Papiermaterial mit einem Oberflächengewicht von 68 - 95 g/m² besteht.

## Claims

1. Combined pre-heating and filtering device, in particular for automobile engines, characterized by several chambers (1, 2, 13, 15) which allow a heat transfer, with each chamber being provided with supply ports (3, 12, 21, 31, 35) as well as discharge ports (5, 14, 17, 23, 32, 36) and joined in form of a modular system and connectable in flow direction, with at least one chamber (2) being designed an heat absorption chamber with a heat insulation element (4, 6, 7, 13) as filter element for allowing passage of a fluid having a heat content, such as motor oil, cooling water, while another chamber (1) is designed as a preheating chamber which at least partly receives the heat content of the heat absorption chamber (2) for another fluid, much as motor fuel, especially diesel fuel, windshield wiper fluid, air.

2. Device according to claim 1, characterized in that the preheating chamber (1) is designed simultaneously as filter chamber.

3. Device according to claim 1 or 2, characterized in that the preheating chamber (1) is provided with an electrical heating rod (10) for a temporary instantaneous heating of the flowing fluid, in particular diesel fuel.

4. Device according to one of the claims 1 to 3, characterized in that the chambers (1, 2) thereof include an inner chamber (1) and an outer chamber (2) in concentric or coaxial arrangement, with the preheating chamber (1) defining the inner chamber and the outer chamber defining the heat absorption chamber (2).

5. Device according to claim 4, characterized in that the heat absorption chamber (2) includes several, at least partly connected filter elements (4, 6, 7) which are arranged coaxially above one another for increasing the preheating capacity and also the filtering efficiency.

6. Device according to one of the claims 1 to 5, characterized in that the heat absorption chamber (2) is adapted for vertical flow of the fluid to be filtered (Figs. 1-3).

7. Device according to one of the claims 1 to 5, characterized in that the heat absorption chamber (2) is adapted for radial flow of the fluid to be filtered (Fig. 4).

8. Device according to one of the claims 1 to 7, characterized in that it is tubular (Figs. 1-4).

9. Device according to one of the claims 1 to 3, characterized in that the apparatus is block-shaped with chambers (15, 13, 20) joined together in form of a modular system (Figs. 5-10).

10. Device according to claim 9, characterized in that the heat absorption chamber is designed as coarse filter chamber (13) and succeeded by a superfine filter chamber (15) via a channel (25) in flow direction of the fluid having a heat content.

11. Device according to one of the claims 1 to 10, characterized in that the heat insulating element (4, 6, 7, 13) which is arranged in the filter chamber (2) and prevents the precipitous escape of heat contained in the fluid being filtered serves as filter material and is made of a lintfree and tear-resistant paper material with a surface weight of 68-95 g/m².

## Revendications

1. Appareil combiné de préchauffage et de filtrage, en particulier pour un moteur de véhicule automobile, caractérisé en ce qu'il est composé de plusieurs chambres (1,2,13,15), susceptibles d'être introduites les unes dans les autres à la façon d'un jeu de construction, pourvues chacune de raccordement d'amenée (3,12,21,31,35) ainsi que de raccordements d'évacuation (5,14,17,23,32,36), permettant un transfert thermique, au moins une chambre (2) étant réalisée sous forme de chambre de captage de chaleur, avec un élément isolant de la chaleur (4,6,7,13), se présentant sous forme d'élément filtrant pour laisser passer un fluide présentant une quantité déterminée de chaleur, tel que de l'huile pour moteur, de l'eau de refroidissement, etc., tandis qu'une autre chambre (1) est configurée sous forme d'une chambre de préchauffage, recevant au moins en partie la quantité de chaleur de la chambre de captage de chaleur (2), pour la destiner à un autre fluide, tel qu'un carburant moteur, en particulier un carburant Diesel, de l'eau de lavage des glaces, de l'air.

2. Appareil selon la revendication 1, caractérisé en ce que la chambre de préchauffage (1) est en même temps réalisée sous forme de chambre à filtre.

3. Appareil selon la revendication 1 ou 2, caractérisé en ce que la chambre de préchauffage (1) est pourvue d'une cartouche chauffante (10) en vue d'opérer un chauffage instantané provisoire du fluide la traversant, en particulier du carburant Diesel.

4. Appareil selon l'une des revendications 1 à 3, caractérisé en ce que ses chambres (1,2) sont prévues suivant un agencement concentrique, respectivement coaxial, entre la chambre intérieure (1) et la chambre extérieure (2), la chambre de préchauffage (1) formant la chambre intérieure, tandis que la chambre extérieure forme la chambre de captage de chaleur (2).

5. Appareil selon la revendication 4, caractérisé en ce que la chambre de captage de chaleur (2) est composée, pour augmenter la capacité de préchauffage et également la puissance de filtrage, de plusieurs éléments filtrants (4,6,7), au moins partiellement reliés entre eux et disposés coaxialement les uns sur les autres.

6. Appareil selon l'une des revendications 1 à 5, caractérisé en ce que la chambre de captage de chaleur (2) est réalisée pour un écoulement vertical du fluide à filtrer (figures 1 à 3).

7. Appareil selon l'une des revendications 1 à 5, caractérisé en ce que la chambre de captage de chaleur (2) est réalisée pour un écoulement radial du fluide à filtrer (figure 4).

8. Appareil selon l'une des revendications 1 à 7, caractérisé en ce que sa configuration est tubulaire (figures 1 à 4).

9. Appareil selon l'une des revendications 1 à 3, caractérisé en ce qu'il est réalisé sous forme de blocs, avec des chambres (15,18,20) susceptibles d'être introduites les unes dans les autres, à la façon d'un jeu de construction (figures 5 à 10).

10. Appareil selon la revendication 9, caractérisé en ce que la chambre de captage de chaleur est réalisée sous forme d'une chambre à filtre grossier (13) et une chambre à filtre fin (15) lui est mise en circuit en aval, dans la direction du fluide contenant de la chaleur, par l'intermédiaire d'un canal (25).

11. Appareil selon l'une des revendications 1 à 10, caractérisé en ce que l'élément isolant de la chaleur (4,6,7,13), situé dans la chambre de filtrage (2), qui empêche l'élimination rapide de la chaleur contenue dans le fluide à filtrer et sert de matériau filtrant, est composé d'un matériau à base de papier, ne faisant pas de peluche et résistant au déchirement, d'un poids surfacique compris dans la plage allant de 68 à 95 g/m².
